# EUROPEAN PATENT APPLICATION

(11) **EP 0 957 297 A1**
(43) Date of publication of application: **17.11.1999**
(21) Application number: 99303777.9
(22) Date of filing: 14.05.1999
(51) Int. Cl.: F16K 3/08, F16K 5/04, F16K 5/02

(54) **Heating/cooling system**

(30) Priority: 15.05.1998 EP 98303874
(71) Applicant: SATCHWELL CONTROL SYSTEMS LIMITED, Slough Berkshire SL1 4UH (GB)
(72) Inventor: Matthews, Dene, Satchwell Control Systems Limited, Berkshire SL1 4UH (GB)
(74) Representative: Haley, Stephen

(57) **Abstract**

A system for controlling the flow of a heating or cooling fluid. The system comprises a conduit through which the fluid can flow in use, and a valve for controlling the flow of fluid through the conduit. The valve comprises a first valve member having at least one passageway formed therein for allowing fluid to pass therethrough, the first member having an engaging surface formed from a friction reducing material, and a second valve member having at least one passageway formed therein and having an engaging surface formed from a friction reducing material, the surface arranged in fluid-tight engagement with the engaging surface of the first member the second member rotatable between a position in which the passageways allow fluid flow through the valve and a position in which fluid flow is prevented. Means for controlling the rotation of the second member is provided, thereby controlling the flow of fluid through the valve. The maximum flow rate or Kvs value of the valve assembly can be adjusted by manually rotating the first valve member.

## Description

This application relates to heating/cooling systems of the type which supply heated or cooled fluid through a conduit.

Heating/cooling systems of the above type have, of course, been known for a number of years. Such systems usually regulate the flow of the fluid involved to control the temperature by employment of a valve. Many valve constructions have been proposed, but it has been difficult to provide a system in which the valve arrangement is low cost and reliable enough for employment in many applications (such as domestic systems), or which can provide a sufficiently high level of control to regulate the fluid flow accurately and reliably (as required in industrial applications).

The present invention seeks to overcome the above and other problems.

According to a first aspect of the present invention, a system for controlling the flow of a heating or cooling fluid, the system comprises a housing having at least one inlet conduit through which, in use, fluid can enter the housing;
at least one outlet conduit through which, in use, fluid can exit the housing; and
a valve for controlling the flow of fluid through the housing, the valve comprising:
a first valve member symmetrical about a first axis, having a bore extending axially therethrough and a passage extending across and communicating with the bore for allowing fluid flow therethrough;
a second valve member extending into the bore and being in fluid-tight engagement with the first member, the second member having at least one inlet port and at least one outlet port to allow fluid flow through the valve, wherein the second member is rotatable relative to the first member to control the fluid flow through the valve; and
means for controlling the rotation of the second valve member, thereby controlling the flow of fluid through the valve.

The housing may have two inlet conduits and one outlet conduit, or one inlet and two outlet conduits or even two inlet and two outlet conduits.

One or both of the valve members may have an engaging surface formed from a friction reducing material.

The housing may consist of a pair of cooperating valve body members. The second valve member may be substantially conical or substantially cylindrical in shape.

The passage extending across the first valve member may be substantially perpendicular to the bore.

According to a second aspect of the present invention there is provided a system for controlling the flow of a heating or cooling fluid, the system comprising:
a conduit through which the fluid can flow in use; and
a valve for controlling the flow of fluid through the conduit, the valve comprising:
a first valve member having at least one passageway formed therein for allowing fluid to pass therethrough, the first member having an engaging surface formed from a friction reducing material;
a second valve member having at least one passageway formed therein and having an engaging surface formed from a friction reducing material, the surface arranged in fluid-tight engagement with the engaging surface of the first member the second member rotatable between a position in which the passageways allow fluid flow through the valve and a position in which fluid flow is prevented; and
means for controlling the rotation of the second member, thereby controlling the flow of fluid through the valve.

Plural passageways may be formed in each of the members so that the valve may control fluid flow in more than one conduit. At least one of the passageways may have a cross-sectional shape that is characterised, so that the relationship between the rotational position of the second member with respect to the first member and fluid flow is non-linear or Equal Percentage Modified.

The means for controlling the rotation of the second member may be a rotary drive. A low voltage electric drive motor may be used or even a manual lever.

The system may be further provided with a rotary drive shaft which is integrally formed with the second valve member and which is connected to the drive unit.

Manually operated control means may be provided for controlling the rotation of the second valve member. The manually operated control means may override the rotary drive unit.

The system may be a domestic heating or cooling system.

The friction reducing material may be plastic, such as a Liquid Crystal Polymer (LCP), or may be ceramic, and each of the members may be formed totally from it.

Fluid tight seals may be provided between the two valve members, or around their outer periphery. The valve may be formed as a single replaceable unit.

Examples of the present invention will now be described with reference to the accompanying drawings, in which:
Figures 1A and 1B are diagrams showing cross-sectional and isometric views of a first example system according to the present invention;
Figure 2 is a schematic diagram showing the construction of example valve members for employment in the system of figure 1;
Figure 3 is a schematic diagram of a second example system according to the present invention;
Figure 4 is a schematic diagram of a third example system according to the present invention;
Figure 5 is an exploded, partially sectioned, perspective view of a fourth example system according to the present invention;
Figure 6 is a cross sectional view through the system of Figure 5;
Figure 7 is an exploded, partially sectioned, perspective view of a fifth example system according to the present invention;
Figure 8 is a cross sectional view through the system of Figure 7; and
Figure 9 is plan view of either of the systems shown in Figures 5 to 8.

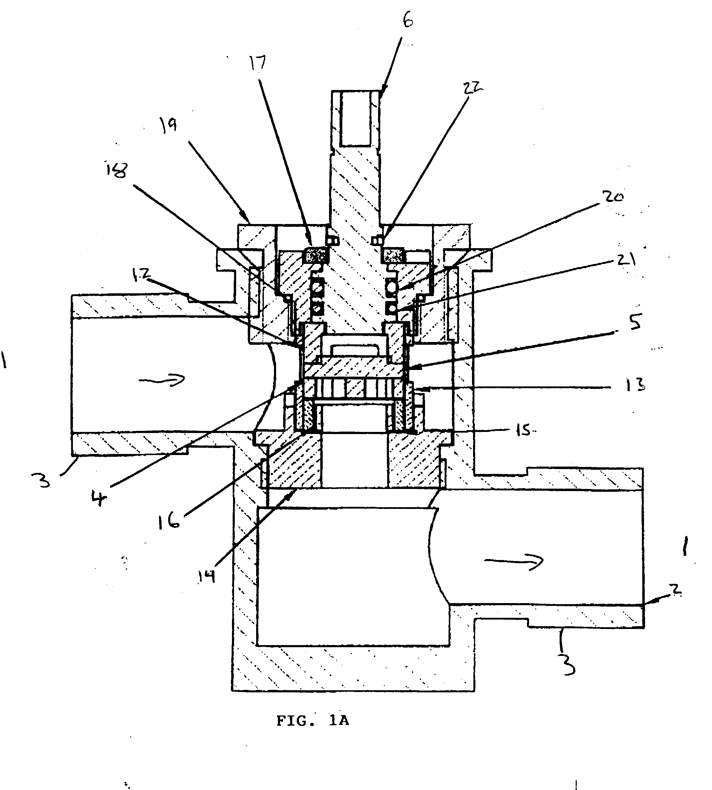

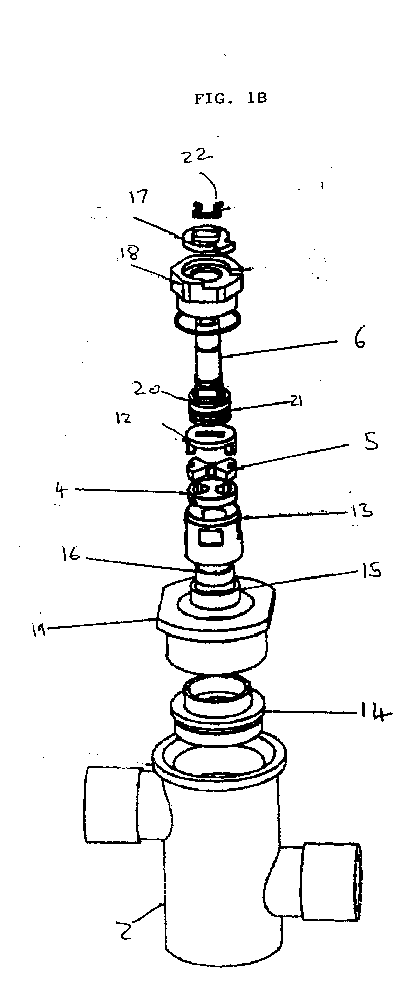

Referring to Figures 1A and 1B, a heating system has a conduit 1 through which a heated or cooled fluid, such as water or refrigerant, flows. So that the flow of the fluid can be controlled, a valve section 2 is positioned in the flow path of the conduit 1. Arrows show fluid flow when the valve is open. In this example the valve unit 2 is arranged to be easily removable for repair and is in sealed attachment with the conduit 1 via a gasket connection 3.

The gasket connections 3 may be arranged for a rapid fit.

Depending upon the application, valve unit 2 may have a housing formed from metal (for high pressure applications) or a more cost effective plastic housing (for low pressure applications).

Positioned within the valve unit 2 are a first valve member 4 and a second valve member 5. In this example, the first valve member 4 is fixed, and the second valve member 5 is arranged to be rotatable around the axis of a shaft 6. It is envisaged, however, that the second valve member 5 and the shaft 6 could be formed as a single element. The shaft 6 is attached to an electric servo motor which, in this example, is of a low voltage type, such as the JR NES 507 or similar servo unit. The provision of a low voltage servo unit has advantages in that it can be controlled directly from traditional control electronics without costly interface and power electronics.

Both the first and second valve members 4, 5 are formed from a material having a friction reducing surface, in this example a LCP Vectra® Hoechst. If the second valve member 5 and the shaft 6 are formed as one element, the second member 5 is coated in a friction reducing material. This means that the servo motor 49 is only required to produce a very low rotational torque, in the region of 0.3 Nm for this example.

The shaft 6 is coupled to the second valve member 5 via a coupling member 12. The first valve member 4 is retained in a housing 13 formed from a plastics material which sits in an insert 14, with seals 15 and 16 providing a fluid-tight connection. The shaft 6 is limited in the extent of its rotation by a limiter 17 and first housing member 18. The first housing member 18 sits in a second housing member 19. Alternatively, the rotation of shaft 6 can be limited by the servo, the valve housing and a control signal to the servo.

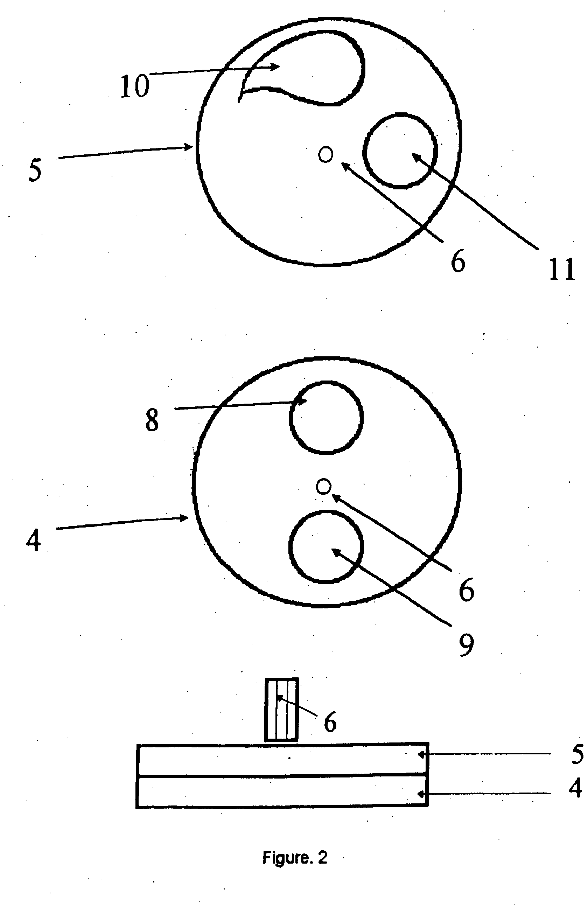

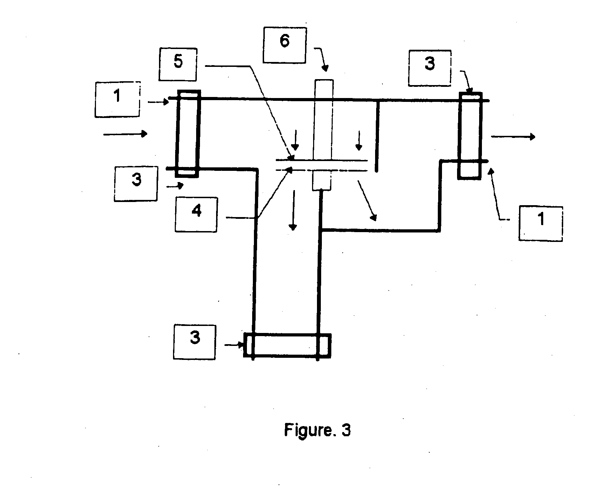

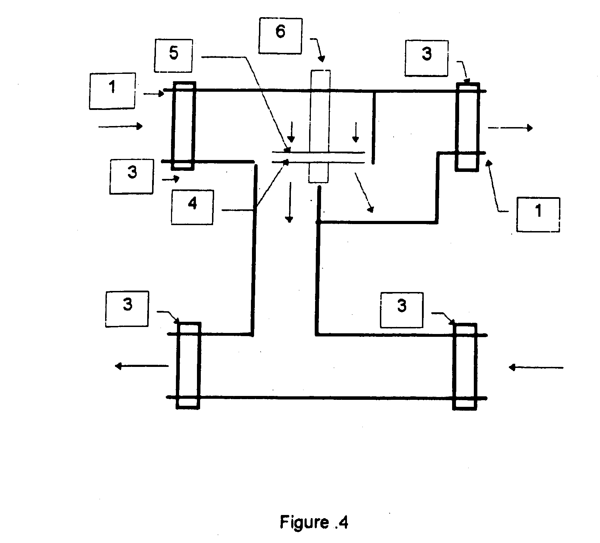

Sealing gaskets 20,21 ensure an adequate fluid-tight seal. A clip 22 retains the shaft in position. Figure 2 shows plan and side views of the first and second valve members 4, 5. The first valve member 4 has two passageways 8,9 formed therein. The second valve member 5 also has two passageways 10, 11 formed therein. In the example of figures la,lb passageway 9 of first valve member 4 may be blocked or may open to the same conduit as passageway 8, but is open to a further conduit in the second and third example systems of the invention shown in figures 3 and 4. With the passageways, both of those in the first valve member 4, and passageway 11 in the second valve member 5 are generally circular. Passageway 10 of the second valve member 5, in this example has a characterised shape. However, this characterisation is dependent upon the particular characteristics of a particular heating system, but is generally provided to define more accurately the fluid flow verses the rotational position of the second valve member 5.

The cross-sectional area of the passageways 8, 9, 10, 11 are selected to provide the appropriate CV or KVs rating (which may conform to the Reynard series) so that the appropriate pressure drop for flow rate can be provided.

The two valve members may have their adjoining diameters sealed by a single gasket or by a welded peripheral member, or by a glued peripheral member.

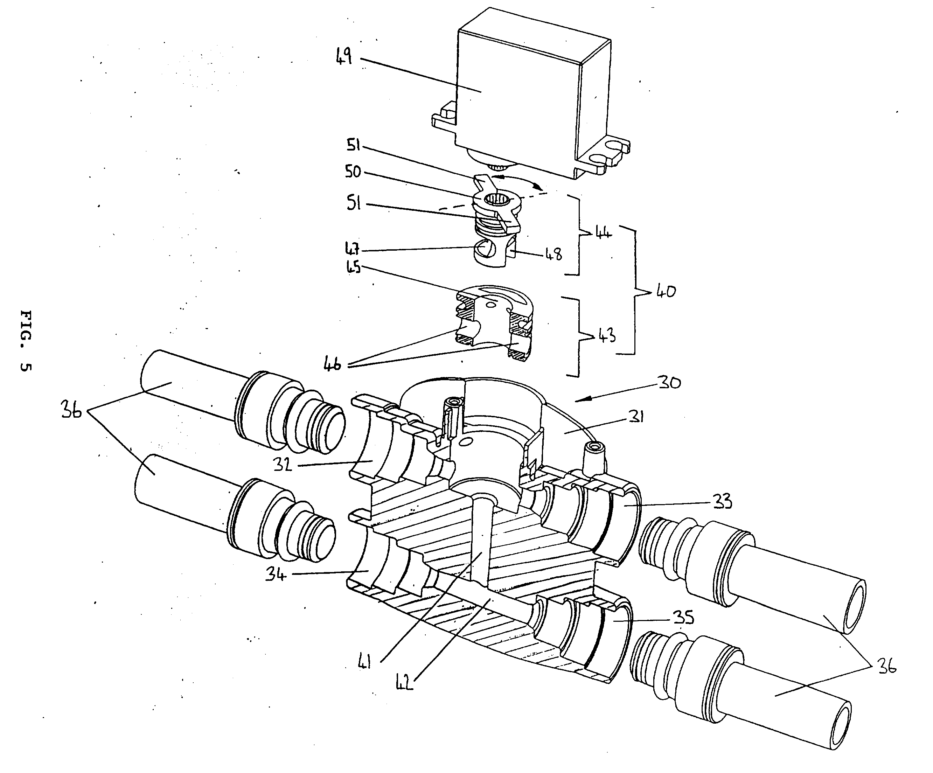

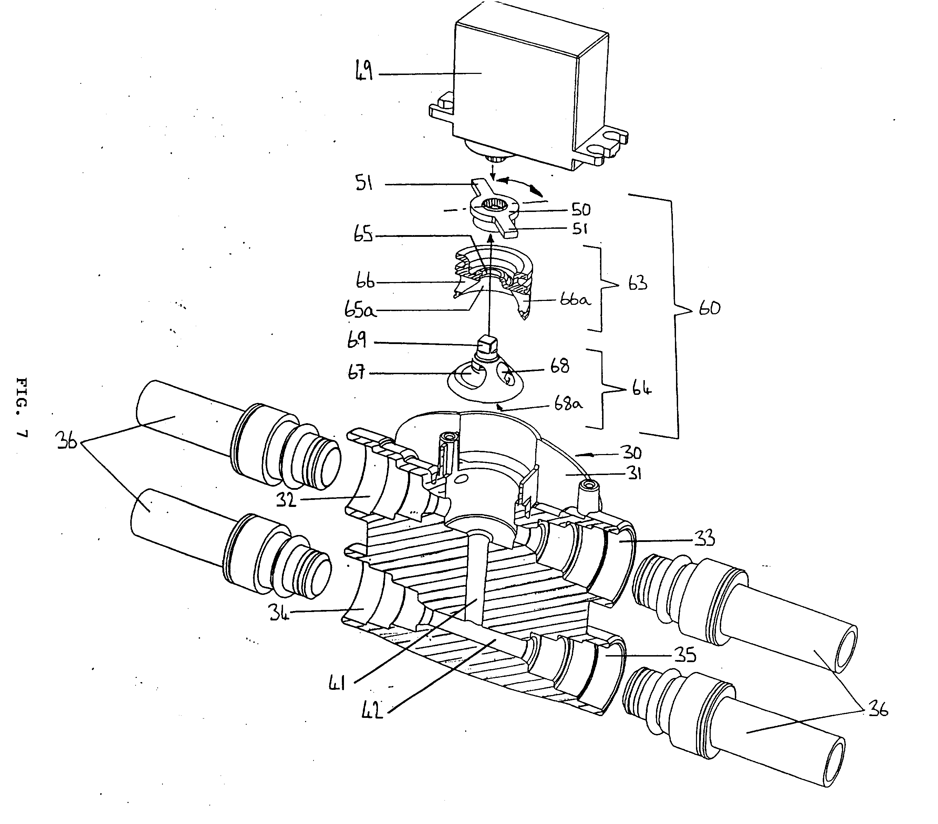

In operation, the servo-motor 49 is controlled to rotate the second valve member 5 so that an appropriate proportion of the passageway 8 (in the example of figures 1A and 1B) and passageway 9 (in the other examples) that is exposed by the passageways 10, 11 of the second valve member 5, thereby controlling the flow of the fluid. Furthermore, the combination of a very low torque rotary drive and friction reducing valve member 5 ensures that any manual override can be effected easily, with minimal user force and without any specialised equipment. As shown in Figs 5 and 7 but equally applicable to this example, control means 50 is provided either on the shaft 6 or on second valve member 5, 44, 64 and, in this example, comprises a pair of opposed arms 51 extending away from the shaft 6 or second valve member 5, 44, 64. The control means can also act as a valve position indicator to show an operator the position in which the second valve member 5, 44, 64 is set.

Figures 3 and 4 show further example heating/cooling systems in which the valve is adapted to be a 3 port and 4 port valve respectively. Again, the arrows show the direction of fluid flow. In all of the examples, the systems could operate with reversed fluid flow.

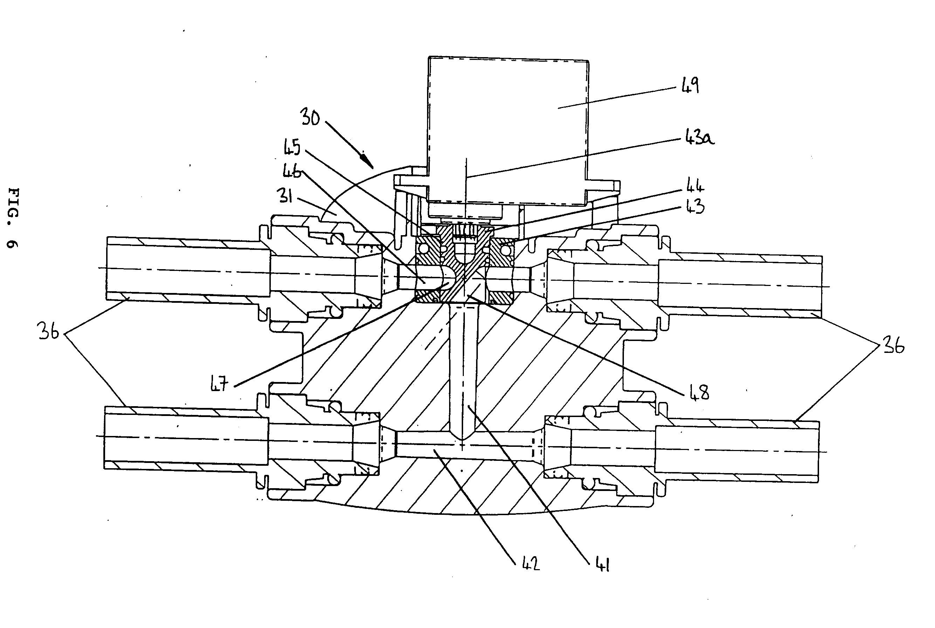

Referring to Figures 5 and 6, a heating system has a housing 30, comprising two substantially similar cooperating sections 31. The housing 30 is provided with a first inlet conduit 35, first 33 and second 34 outlet conduits and an additional inlet conduit 32 which returns, to the housing 30, fluid which has exited through conduit 34. Inlet conduit 32 and outlet conduit 33 are arranged to be substantially coaxial with each other and are located parallel to and spaced from conduits 34 and 35 which also are arranged to be substantially coaxial with each other. Pipes 36 are provided to snap fit into the respective conduits 32...35.

A valve 40 is provided between conduit 32 and conduit 33. A passageway 41 places the valve 40 in fluid communication with a connecting passage 42 which links conduits 34 and 35. The valve 40 comprises a first valve member 43 and a second valve member 44.

The first valve member 43 is symmetrical about an axis 43a and is provided with a bore 45 extending axially therethrough. A passage 46 extends through the first valve member 43, substantially perpendicular to the bore 45. The bore 45 is shaped to receive the second valve member 44 such that, in use, the first and second valve members are in fluid tight engagement.

The second valve member 44 has ports 47 and 48 and is connected to a servo-motor 49 which controls the rotation of the second member 44. The second valve member 44 can be rotated between positions in which fluid can flow from the inlet conduit 35, through passageway 41 and out through conduit 33, and a position in which fluid can flow from inlet conduit 35 to outlet conduit 34 and back in through conduit 32 and out through conduit 33. The second valve member is shaped so that, in use, the rate of fluid flow through inlet conduit 32 is varied with its rotational position. The inlet ports 47,48 are shaped so that the ratio of the fluid flow passing through outlet conduit 34 and channel 41 can be varied. This variation may have linear or non-linear characteristics.

The second valve member 44 is provided with control means 50, which can be operated manually, for overriding the servo-motor 49. The control means 50 has a pair of opposed arms 51 extending away from the second valve member 44. An operator can easily use the control means 50 to set the second valve member 44, 64 to the correct position prior to use. Further, the valve can be operated, during use, to alter the flow conditions therein without the need for a control signal to be sent to the servo motor 49. The arms 51 provide an indication of the position of the second valve member 44 to an operator of the system so that the operator knows the extent to which inlet conduit 32 is open.

It will be appreciated that the first valve member 43 could be integral with the housing 30, reducing the number of components.

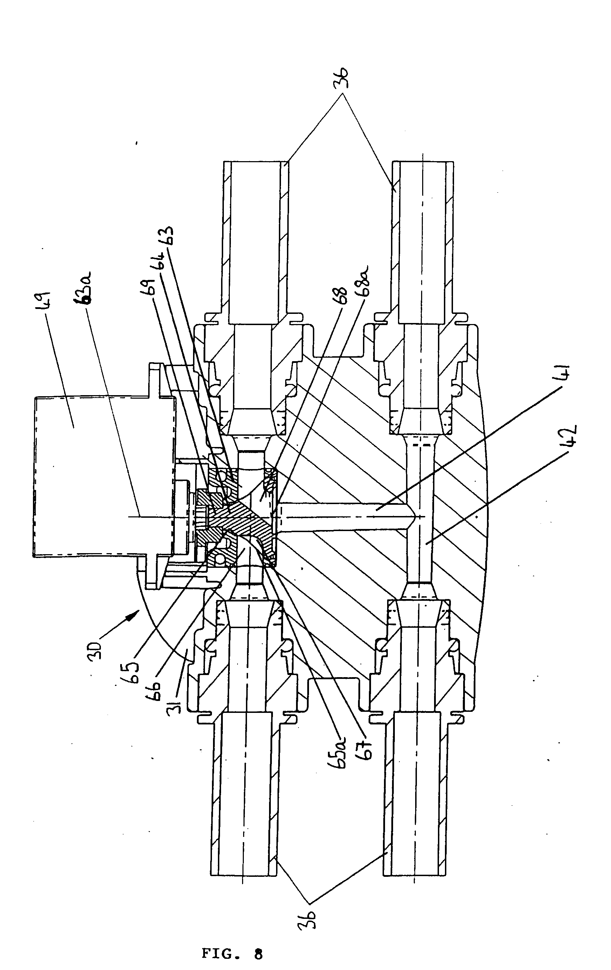

It will also be appreciated that the flow direction can be in the opposite direction through passageway 41 and that the valve would then be provided with two inlets and only one outlet. In this alternative arrangement, the valve would control the proportions of fluid from several inlet flows which are allowed to pass through the valve. A fifth example of the present invention is shown in Figures 7 and 8, in which the valve 60 has first 63 and second 64 valve members which have different configurations to those of the fourth example.

The first valve member 63 is substantially symmetrical about axis 63a and is provided with a bore 65 extending axially therethrough. A part of the bore 65A is substantially conical to cooperate with the second valve member 64 which is also conical. The second valve member 64 is provided with two inlet ports 67,68a. The inlet port 67 for communicating with inlet conduit 32 and outlet conduit 33. Inlet port 68a communicates with passageway 41 throughout the operation with its outlet port 68 communicating with outlet conduit 33 when permitted. An engagement portion 69 is provided on the second valve member 64 and, in use, the engagement portion 69 extends through the bore 65 and engages with control means 50.

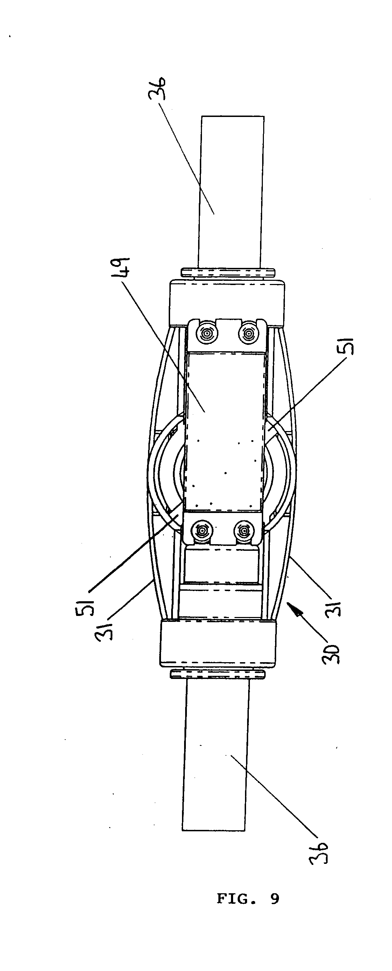

Figure 9 shows the arms 51 of the control means extending out from underneath the servo 49. As the servo rotates the second valve member 5, 44, 64 the control arms 51 are also rotated. Accordingly these arms indicate the position of the second valve member and inform the operator of the extent to which the valve is open. Further, the first valve member, 63 (43 in previous example), can be rotated manually to adjust the maximum flow rate or Kvs value of the valve assembly. The Kvs can be continuously adjusted to obtain the optimum hydraulic performance for the branch/leg or it could be increased in pre-set steps as with current Kvs sizes. Where the optimum Kvs position can be found, the need for the balancing valve in the associated branch, is removed thus introducing a considerable cost saving. The shape of the ports 66a, 66, 67, 68 and 46, 47, 48 may be selected to make this adjustment linear. This will allow 3 or 4 valve sizes to be made from one component further reducing inventory and cost due to the use of less material.

Channel 46,66a is moved axially across conduits 32,33 thus adjusting the maximum flow rate. This allows the optimum performance to be obtained and in some cases the removal of the balancing valve usually found in such hydraulic systems.

The KVs value can be indicated on the first valve member and will be set via a reference point on the valve body. This will allow the commissioning engineer to record the setting after commissioning. As balancing valves are also used to provide a means of hydraulic isolation, a lower cost isolating valve, such as a slip coupler, may be provided.

## Claims

1. A system for controlling the flow of a heating or cooling fluid, the system comprising: a housing having at least one inlet conduit through which, in use, fluid can enter the housing;
at least one outlet conduit through which, in use, fluid can exit the housing; and a valve for controlling the flow of fluid through the housing, the valve comprising:
a first valve member symmetrical about a first axis, having a bore extending axially therethrough and a passage extending across and communicating with the bore for allowing fluid flow therethrough;
a second valve member extending into the bore and being in fluid-tight engagement with the first member, the second member having at least one inlet port and at least one outlet port to allow fluid flow through the valve, wherein the second member is rotatable relative to the first member to control the fluid flow through the valve; and
means for controlling the rotation of the second valve member, thereby controlling the flow of fluid through the valve.

2. A system according to claim 1, wherein the housing has two inlet conduits and one outlet conduit.

3. A system according to claim 1, wherein the housing has one inlet conduit and two outlet conduits.

4. A system according to claim 1, wherein the housing has two inlet and two outlet conduits.

5. A system according to any one of the preceding claims, wherein one or both of the valve members has an engaging surface formed from a friction reducing material.

6. A system according to any one of the preceding claims, wherein the housing comprises a pair of cooperating valve body members.

7. A system according to any one of the preceding claims, wherein the second valve member is substantially conical in shape.

8. A system according to any one of claims 1 to 6, wherein the second valve member is substantially cylindrical.

9. A system according to any one of the preceding claims, wherein the passage through the first valve member is substantially perpendicular to the bore.

10. A system for controlling the flow of a heating or cooling fluid, the system comprising:
a conduit through which the fluid can flow in use; and
a valve for controlling the flow of fluid through the conduit, the valve comprising:
a first valve member having at least one passageway formed therein for allowing fluid to pass therethrough, the first member having an engaging surface formed from a friction reducing material;
a second valve member having at least one passageway formed therein and having an engaging surface formed from a friction reducing material, the surface arranged in fluid-tight engagement with the engaging surface of the first member the second member rotatable between a position in which the passageways allow fluid flow through the valve and a position in which fluid flow is prevented; and
means for controlling the rotation of the second member, thereby controlling the flow of fluid through the valve.

11. A system according to claim 10, wherein plural passageways are formed in each of the members so that the valve may control fluid flow in more than one conduit.

12. A system according to claim 11, wherein at least one of the passageways has a cross-sectional shape that is characterised.

13. A system according to any one of the preceding claims, wherein the means for controlling the rotation of the second valve member comprises a rotary drive unit, such as a servo-motor.

14. A system according to any one of the preceding claims, further comprising a drive shaft which is integrally formed with the second valve member and which is connected to the drive unit.

15. A system according to any one of the preceding claims, further comprising manually operated control means for controlling the rotation of the second valve member.

16. A system according to any one of the preceding claims, wherein the system is a domestic heating or cooling system.

17. A system according to any one of the preceding claims, wherein the friction reducing material is plastic.

18. A system according to claim 17, wherein the friction reducing material is a Liquid Crystal Polymer.

19. A system according to any one of claims 1 to 16, wherein the friction reducing material is ceramic.

20. A system according to any one of the preceding claims, wherein the valve is formed as a single replaceable unit.

21. A system according to any one of the preceding claims, wherein the first valve member is manually rotatable to control the maximum flow rate or Kvs value of the valve system.
